# EUROPÄISCHE PATENTSCHRIFT

(11) **EP 1 404 558 B1**
(45) Veröffentlichungstag und Bekanntmachung des Hinweises auf die Patenterteilung: **26.04.2006**
(21) Anmeldenummer: 02758234.5
(22) Anmeldetag: 14.06.2002
(51) Int. Cl.: B60T 13/68, B60T 15/14, B60T 7/04

(54) **KOMBINIERTE ELEKTRO-PNEUMATISCH UND MECHANISCH BETÄTIGBARE VENTILEINRICHTUNG UND STEUERVORRICHTUNG FÜR EIN BREMSSYSTEM**
COMBINED ELECTROPNEUMATICALLY AND MECHANICALLY ACTUATABLE VALVE SYSTEM AND CONTROL DEVICE FOR A BRAKING SYSTEM
ENSEMBLE SOUPAPE A ACTIONNEMENT COMBINE ELECTRO-PNEUMATIQUE ET MECANIQUE ET DISPOSITIF DE COMMANDE POUR UN SYSTEME DE FREINAGE

(30) Priorität: 20.06.2001 DE 10129602
(43) Veröffentlichungstag der Anmeldung: 07.04.2004
(73) Patentinhaber: KNORR-BREMSE SYSTEME FÜR NUTZFAHRZEUGE GMBH, 80809 München (DE)
(72) Erfinder: RÖTHER, Friedbert, 74389 Cleebronn (DE); HERGES, Michael, 70825 Korntal-Münchingen (DE)
(74) Vertreter: Schönmann, Kurt
(86) Internationale Anmeldenummer: PCT/EP2002/006558
(87) Internationale Veröffentlichungsnummer: WO 2003/000526

(56) Entgegenhaltungen:
- DE-A- 19 653 264
- DE-A- 19 746 342
- DE-A- 19 852 399
- US-A- 5 700 063
- US-B1- 6 203 115

## Beschreibung

Die Erfindung betrifft eine kombinierte elektro-pneumatisch und mechanisch betätigbare Ventileinrichtung für Bremssysteme mit mindestens zwei Druckkreisen, im einzelnen mit den Merkmalen aus dem Oberbegriff des Anspruchs 1; ferner eine Steuervorrichtung für ein Bremssystem, insbesondere ein Fahrzeugbremssystem.

Bremseinrichtungen für Fahrzeuge sind hinsichtlich ihres Aufbaus und der Funktionsweise in unterschiedlichen Ausführungen bekannt. Stellvertretend wird auf die nachfolgend genannten Druckschriften:
1. DE 197 46 342 A1 und
2. DE 198 15 440 A1
verwiesen.

Die Druckschrift DE 197 46 342 A1 offenbart beispielhaft eine druckmittelbetätigte Fahrzeugbremsanlage mit wenigstens einem ersten, der Hinterachse des Fahrzeuges zugeordneten Bremskreis und einem zweiten, der Vorderachse des Fahrzeuges zugeordneten Bremskreis. Dabei sind dem ersten Bremskreis als auch dem zweiten Bremskreis je zwei Bremszylinder und je eine Steuerventileinrichtung zugeordnet, über welche die Bremszylinder in Abhängigkeit von einem Steuerdruck mit einer dem jeweiligen Bremskreis zugeordneten Druckmittelquelle oder mit einer Druckmittelsenke verbindbar sind. Zur Steuerung des an den Bremszylindern anliegenden Druckes sind in der Regel Steuereinrichtungen vorgesehen, welche den einzelnen Bremskolben zugeordnet werden. Die Steuerung des Druckes an den Bremszylindern erfolgt dabei elektro-pneumatisch und zusätzlich zur Gewährleistung einer sicheren Betriebsweise bei Ausfall der Elektronik rein pneumatisch. Die Betätigung im letztgenannten Fall erfolgt bekanntermaßen mechanisch. Dazu ist ein mit einem Bremswertgeber koppelbares Betätigungselement vorgesehen, über welches der Fahrer einen Wunsch nach Verzögerung beziehungsweise Erzeugung eines Bremsmomentes abgibt. Aus dem Fahrerwunsch wird ein entsprechendes Signal generiert, welches einem Eingang einer Steuereinrichtung zugeführt wird. In der Steuereinrichtung wird der am Bremszylinder aus dem Fahrerwunsch resultierende erforderliche Druck berechnet und mindestens ein Stellsignal zur Ansteuerung einer Einrichtung zur Erzeugung beziehungsweise Bereitstellung des Druckes erzeugt. Der dabei im Bremszylinder erforderliche bereitzustellende Druck wird mittels einem separaten Gerät, dem sogenannten Druckregelmodul erzeugt. Dieses umfaßt eine Steuerkammer und eine Arbeitskammer, wobei die Steuerkammer über ein zusätzliches Ventil mit einer Druckmittelquelle gekoppelt ist, während die Arbeitskammer mit dem Bremszylinder wenigstens mittelbar verbunden ist. Für den Fall des Ausfalls der Elektronik wird jedoch ein rein pneumatisches Rückfallsystem benötigt, das zumindest einen Backupkreis enthält. Dieses rein pneumatische Rückfallsystem ist dabei derart ausgebildet, dass dieses ein Betriebsbremsventil mit mindestens einer Arbeitskammer umfasst, die ebenfalls mit dem Bremszylinder gekoppelt ist. Die Betätigung erfolgt über das Betätigungselement, insbesondere weg- oder druckabhängig.

In der Fahrzeugindustrie ist es dabei üblich, die einzelnen Komponenten der Bremsanlage oder andere Systeme speziell auf die entsprechenden Einsatzerfordernisse einzelner Fahrzeugtypen anzupassen beziehungsweise abzustimmen, mit dem Ziel, das Einsatzverhalten dieser Fahrzeuge zu optimieren. Dazu ist es erforderlich, zahlreiche Varianten für Einzelkomponenten zu produzieren und vorzuhalten, welche dann entsprechend den Einsatzerfordernissen miteinander zu kombinieren sind. Dies bedeutet erheblich höhere Lagerhaltungskosten. Des weiteren bedingt die Kopplung der einzelnen Elemente einen höheren Leitungs- und Verkabelungsaufwand, welcher wiederum eine Fehlerquelle darstellen kann.

Eine Ausführung einer Steuereinrichtung für eine Fahrzeugbremsanlage, welche diese Nachteile zumindest teilweise vermeidet, ist aus der Druckschrift DE 198 15 440 A1 bekannt. Bei dieser sind der Bremswertgeber, der Elektronikblock und ein Teil der Steuerelektronik zu einer Baueinheit zusammengefaßt.

Die deutsche Offenlegungsschrift 198 52 399 beschreibt einen Bremswertgeber, bei dem nach dem Prinzip der Additionsredundanz der vom Bremswertgeber mechanisch erzeugte Druck zu dem vom Bremsmodulator elektronisch erzeugte Druck addiert wird und der Summendruck den auf die Bremszylinder wirkenden Bremsdruck darstellt. Bei einem elektronischen Ausfall wird der vom Bremswertgeber mechanisch erzeugte Druck automatisch als Bremsdruck wirksam.

Der Erfindung liegt daher die Aufgabe zugrunde, eine Steuervorrichtung für ein Bremssystem eines Fahrzeuges derart weiterzuentwickeln, daß neben einer Verringerung der Anzahl einzelner Bauelemente der zur Verfügung stehende Bauraum noch optimaler ausnutzbar ist und der Installationsaufwand für die elektrischen und pneumatischen Verbindungen eine erhebliche Reduktion erfährt. Des weiteren ist eine Senkung der Lagerhaltungskosten mit einfachen Mitteln anzustreben, wobei ein hoher Grad an Standardisierung erzielt werden soll. Die Steuereinrichtung soll allen Sicherheitsanforderungen, welche bekannte Systeme mit separaten Geräten erfüllen, gerecht werden.

Die erfindungsgemäße Lösung ist durch die Merkmale der Ansprüche 1 und 10 charakterisiert. Vorteilhafte Ausgestaltungen sind in den Unteransprüchen wiedergegeben.

Erfindungsgemäß sind bei einer Steuervorrichtung für ein Bremssystem die zum Druckregelmodul gehörende Ventileinrichtung und die mechanisch betätigbare Betriebsbremsventileinrichtung in einer baulichen Einheit unter Ausnutzung gemeinsamer Elemente zur Umsetzung der Funktionen miteinander zu einer kombinierten elektro-pneumatisch und mechanisch betätigbaren Ventileinrichtung zusammengefaßt. Diese umfaßt eine, in einem Gehäuse angeordnete Arbeitskammer, wenigstens einen Anschluß zur Koppelung mit einer Druckmittelquelle oder Druckmittelsenke, einen Anschluß zur Koppelung der Arbeitskammer mit mindestens einem Betriebsbremszylinder, einen Anschluß zu einem Entlastungsraum, vorzugsweise einem Schalldämpfer und einen, indirekt über weitere Übertragungselemente oder direkt mit einer Betätigungseinrichtung koppelbaren Ventilsitz, welcher mit einem Ventilglied zusammenwirkt. Der Begriff Anschluß soll dabei allgemein dahin verstanden werden, daß über Öffnungen im Gehäuse, insbesondere der Gehäusewand oder Leitungen, die sich durch die Gehäusewand erstrecken, Möglichkeiten der Koppelung mit den anderen Funktionseinheiten Druckmittelquelle, Entlastungsraum oder Betriebsbremszylinder gegeben sind. Der Begriff Anschluß ist dabei nicht auf eine konkrete konstruktive Ausgestaltung einer Kopplung am Gehäuse beschränkt. Ventilsitz und Ventilglied sind dabei koaxial zueinander angeordnet und in einer Kammer parallel gegeneinander verschiebbar geführt und unterteilen die Kammer in eine Steuerkammer und die Arbeitskammer. Das Ventilglied ist zwischen dem Anschluß zur Koppelung mit einer Druckmittelquelle und der Arbeitskammer angeordnet und druckdicht im Gehäuse geführt. Beiden - dem Ventilsitz und dem Ventilglied - sind an den voneinander weggerichteten Stirnseiten jeweils ein Anschlag im Gehäuse zugeordnet. Die einzelnen Funktionsweisen - elektro-pneumatische Drucksteuerung und mechanisch-pneumatische Drucksteuerung ergeben sich dabei durch die Betätigung unterschiedlicher Elemente der kombinierten Ventileinrichtung. Ventilglied und Ventilsitz sind derart ausgeführt, daß nur im Zustand des Nichtzusammenwirkens miteinander, d.h. bei Beabstandung zwischen Ventilsitz und Ventilglied eine Verbindung zwischen Arbeitskammer und Entlastungsraum gegeben ist.

Die kombinierte elektro-pneumatisch und mechanisch betätigbare Ventileinrichtung zeichnet sich durch einen hohen Grad an Kompaktheit, eine geringe Anzahl an Bauelementen bei optimaler Ausnutzung dieser in unterschiedlichen Betriebsweisen und geringen Bauraumbedarf aus. Erforderliche Verbindungsleitungen können auf ein Minimum reduziert werden.

Bezüglich der konkreten konstruktiven Ausführung der einzelnen Elemente bestehen mehrere Möglichkeiten. In einer besonders vorteilhaften Ausgestaltung der kombinierten elektro-pneumatisch und mechanisch betätigbaren Ventileinrichtung ist das Ventilglied als Manschettenteil ausgebildet. Das Ventilglied umfaßt dabei einen Doppelkolben mit zwei druckdicht im Gehäuse geführten Kolbenteilen und integrierter Verbindungsleitung und/oder einem Zwischenraum und mindestens eine, zwischen beiden Kolbenteilen angeordnete und an einem Kolbenteil koaxial zu diesem angeordnete Manschette zur wahlweisen Freigabe oder Verschluß der Verbindung zwischen dem Anschluß zur Druckmittelquelle und dem Arbeitsraum, welche entweder
a) aufgrund ihrer koaxialen Ausrichtung im Gehäuse in Richtung der Längsachse des Gehäuses zu diesem Kolbenteil verschiebbar geführt ist oder
b) fest am Kolbenteil angelenkt und um den Anlenkpunkt verschwenkbar oder auslenkbar ist.

Der Doppelkolben kann dabei
a) einteilig als integrale Baueinheit mit eingearbeiteten Zwischenraum oder
b) mehrteilig
ausgeführt sein, wobei sich im letztgenannten Fall die Baueinheit Doppelkolben durch Montage ergibt.

Die Ausführung des Ventilgliedes als Manschettenteil in Form eines Doppelkolbens bietet den Vorteil, daß mit einfachen Mitteln neben der wahlweisen Absperrung oder Freigabe der Verbindung zwischen Druckmittelquelle und Arbeitskammer gleichzeitig eine sichere und druckdichte Trennung zwischen Arbeitskammer und Steuerkammer ohne zusätzlich erforderliche Elemente erfolgt.

Vorzugsweise ist zwischen Manschette und einem Kolbenteil eine Federeinheit vorgesehen, welche bei Betätigung der Manschette, d.h. Verschiebung oder Auslenkung bei Verschiebung des Manschettenteils gegenüber dem Ventilsitz oder Verschiebung des Ventilsitzes gegenüber dem Manschettenteil und Kontakt zwischen Ventilsitz und Manschette vorgespannt oder weiter vorgespannt wird und im unbelasteten Zustand der Manschette eine Zurückstellung der Manschette in eine Position, welche eine Abdichtung der Arbeitskammer gegenüber dem Druckmittelanschluß ermöglicht, bewirkt. Entsprechend der konstruktiven Auslegung der Einzelelemente, insbesondere der Manschettengröße, des Ventilsitzes, der Federeinheit etc. kann somit immer eine sichere Unterbrechung der Druckmittelbeaufschlagung der Arbeitskammer im nicht betätigten Zustand des Bremssystems erzielt werden.

Der Doppelkolben ist derart im Gehäuse integriert, daß der erste Kolbenteil mit seiner zur Kammer gerichteten Stirnseite die Steuerkammer und der zweite Kolbenteil die Arbeitskammer begrenzen. Erster und zweiter Kolbenteil sind im Gehäuse druckdicht geführt. Die druckdichte Führung beider Kolbenteile erfolgt vorzugsweise an den äußeren Gehäuseinnenwänden, so daß die einzelnen Kammern eine optimale Abdichtung zwischen Anschluß zur Koppelung mit einer Druckmittelquelle und Ventilglied erfahren. Das erste Kolbenteil ist druckdicht an einer inneren Gehäusewand, welche vorzugsweise zentral im Gehäuseinneren angeordnet ist, geführt. Das zweite, hinsichtlich seiner Abmessungen, insbesondere der Erstreckung von der äußeren Gehäuseinnenwand zur Gehäusemitte, zum ersten Kolbenteil unterschiedlich ausgeführte Kolbenteil erfährt seine druckdichte Führung im Gehäuse über die Koppelung mit dem ersten Kolbenteil. Die Manschette ist zwischen erstem und zweitem Kolbenteil angeordnet und ermöglicht den wahlweisen Verschluß oder die Freigabe des zwischen beiden gebildeten Zwischenraumes oder der Verbindungsleitung gegenüber der Arbeitskammer. Diese Lösung bietet den Vorteil, daß das den Ventilsitz tragende Element hinsichtlich seiner Breite sehr klein gebaut werden kann und dementsprechend die die Druckkräfte übertragenden Elemente nur einen geringen Hebelarm aufweisen, was bei der Auslegung und Werkstoffwahl zu positiven Effekten hinsichtlich des Gewichtes und der Kosten führen kann.

Unter einem weiteren Aspekt der Erfindung wird bei Kombination der beiden Ventileinrichtungen beziehungsweise Zusammenfassung in einer kombinierten elektro-pneumatisch und mechanisch betätigbaren Ventileinrichtung der in der Arbeitskammer erzeugte Druck bei elektro-pneumatischer Betätigung zur Erzeugung der Gegenkraft am Bremspedal genutzt, indem dieser Druck auf eine Kolbenfläche geleitet wird, welche der Bewegungsrichtung der Betätigung entgegenwirkt. Dazu ist im Gehäuse eine weitere zweite, von der ersten Kammer durch eine Zwischenwand getrennte Kammer vorgesehen, in der ein mit dem Betätigungselement koppelbarer Pedalkraftkolben angeordnet ist.
Der Pedalkraftkolben, der Ventilsitz und das Ventilglied sind koaxial zueinander angeordnet. Der Pedalkraftkolben stützt sich über eine Federeinheit an der Zwischenwand ab. Das den Ventilsitz bildende Element ist gegenüber dem Pedalkraftkolben verschiebbar geführt, vorzugsweise am Pedalkraftkolben, wobei bei Kontakt zwischen Pedalkraftkolben und Ventilsitz über Mitnahme eine Zwangsbewegung des jeweils anderen Elementes - Ventilsitz oder Pedalkraftkolben - erzeugt werden kann. Zur Erzielung eines Feedbacks über die erzielte Bremswirkung ist die Arbeitskammer mit der zweiten Kammer, in welcher der Pedalkraftkolben geführt ist, insbesondere der Druckkammer verbunden, beispielsweise über eine Verbindungsleitung zwischen Arbeitskammer und Druckkammer oder Öffnungen in der Zwischenwand. Durch die gezielte Auslegung der Flächenverhältnisse am Kolben besteht die Möglichkeit, daß zur Erzeugung des Backupdruckes, d.h. des Drucks bei mechanisch-pneumatischer Betätigung, mehr, weniger oder gleich viel Kraft bei der mechanischen Betätigung aufgewendet werden muß, wie bei der elektrisch gesteuerten Bremsung, wobei die Auslegung der Flächenverhältnisse zur Ausbildung beliebiger Charakteristiken der Pedalkraft kundenspezifisch erfolgen kann.

Die Funktion der Anschläge kann konstruktiv auf unterschiedliche Art und Weise erzeugt werden. Dabei können Ventilsitz, Ventilglied oder den entsprechenden Gehäuseinnenwänden Vorsprünge zugeordnet werden, welche jeweils die Verschiebbarkeit von Ventilsitz und Ventilglied in Richtung der äußeren Gehäuseinnenwände bzw. der äußeren Kammerinnenwände begrenzen.

Die erfindungsgemäß gestaltete kombinierte elektro-pneumatisch und mechanisch betätigbare Ventileinrichtung ist erfindungsgemäß desweiteren Bestandteil einer Steuervorrichtung für ein Bremssystem mit mindestens zwei Druckkreisen - einem ersten, elektropneumatischen Druckkreis und einem zweiten, mechanisch betätigbaren Druckkreis - für den Einsatz in Fahrzeugen. Die Steuervorrichtung umfaßt einen Bremswertgeber, eine Steuereinrichtung und die kombinierte Ventileinrichtung mit integriertem Betriebsbremsventil und einen Druckregelmodul. Unter einem weiteren Aspekt der Erfindung sind diese einzelnen Elemente beziehungsweise Baueinheiten zu einer zentralen Baueinheit in Form eines Zentralmoduls zusammengefaßt. Diese Zusammenfassung erfolgt dabei durch die räumlich nahe Anordnung der einzelnen Elemente Bremswertgeber, Steuereinrichtung und kombinierte Ventileinrichtung. Für die Zusammenfassung der einzelnen Elemente zu einem Zentralmodul - der Elemente der elektropneumatischen Drucksteuerung und der mechanisch-pneumatischen Drucksteuerung - bestehen eine Vielzahl von Möglichkeiten. Die einzelnen Elemente können dabei
a) durch Aneinanderanflanschen ihrer Gehäuse oder
b) Integration einer Mehrzahl von Komponenten in einem gemeinsamen Gehäuse oder
c) Integration von Komponenten in einem gemeinsamen Gehäuse und

Anflanschen der restlichen Komponenten am gemeinsamen Gehäuse miteinander zu einer baulichen Einheit zusammengefaßt werden. Dies bietet den Vorteil, daß die Steuervorrichtung für ein Bremssystem mit mindestens zwei Druckkreisen, welche wenigstens einen Betriebszylinder zuordenbar sind, als selbständig handelbare Baueinheit ausführbar ist und der Aufwand für erforderliche Verkabelungen vor Ort am Fahrzeug erheblich reduziert werden kann, da die einzelnen Verbindungsleitungen - für Betriebsmittel und elektrische Verbindungsleitungen - bereits mit im Zentralmodul integriert sind. Die erforderliche Leitungslänge wird erheblich minimiert. Bezüglich der räumlichen Zuordnung der einzelnen Elemente zueinander bestehen ebenfalls eine Vielzahl von Möglichkeiten, welche jedoch im Ermessen des zuständigen Fachmannes liegen.

Unter einer Steuereinrichtung wird dabei ein Steuergerät, beispielsweise in Form einer ECU verstanden. Die Funktion des Druckregelmoduls besteht darin, den am Bremszylinder erforderlichen Druck einzuregeln. Der Druckregelmodul ist dabei hinsichtlich seiner Funktion zwischen dem Steuergerät und dem Bremszylinder angeordnet. Dieser umfaßt einen sogenannten elektro-pneumatischen Druckmodulator, welcher mit einem Ausgang der Steuereinrichtung gekoppelt ist und eine Ventileinrichtung, umfassend eine Steuerkammer und eine Arbeitskammer, welche erfindungsgemäß Bestandteil der kombinierten elektro-pneumatisch, oder mechanisch betätigbaren Ventileinrichtung ist, wobei der Druckmodulator mit der Steuerkammer gekoppelt ist. Des weiteren umfaßt der Druckregelmodul steuerbare Ventileinrichtungen, welche auch als Steuerventileinrichtungen bezeichnet werden, die den Druck in der Steuerkammer beeinflussen. Diese Steuerventileinrichtungen können auf unterschiedliche Art und Weise angesteuert werden. Eine bevorzugte Ausführung besteht in der elektromagnetischen Ansteuerung über die Steuereinrichtung. Zur Bildung des Zentralmoduls werden bei Vorsehen der kombinierten Ventileinrichtung der Bremswertgeber, Steuereinrichtung und die einzelnen zur Steuerung erforderlichen zusätzlichen Ventileinrichtungen entweder am Gehäuse der elektro-pneumatisch oder mechanisch betätigbaren Ventileinrichtung angeflanscht oder in einer anderen Art und Weise befestigt oder aber mit der Ventileinheit in einem gemeinsamen Gehäuse integriert. Vorzugsweise wird jedoch bezüglich der Zugänglichkeit die erste Variante gewählt.

Die erfindungsgemäße Lösung ist nachfolgend anhand von Figuren erläutert. Darin ist im einzelnen folgendes dargestellt:
- Figur 1: verdeutlicht in schematisch vereinfachter Darstellung den Grundaufbau einer erfindungsgemäß gestalteten kombinierten elektro-pneumatisch oder mechanisch betätigbaren Ventileinrichtung in einer Steuervorrichtung für ein Bremssystem;
- Figuren 2a bis 2e: verdeutlichen die Funktionsweise der Ventileinrichtung gemäß Figur 1 in einer Steuervorrichtung in unterschiedlichen Funktionszuständen.

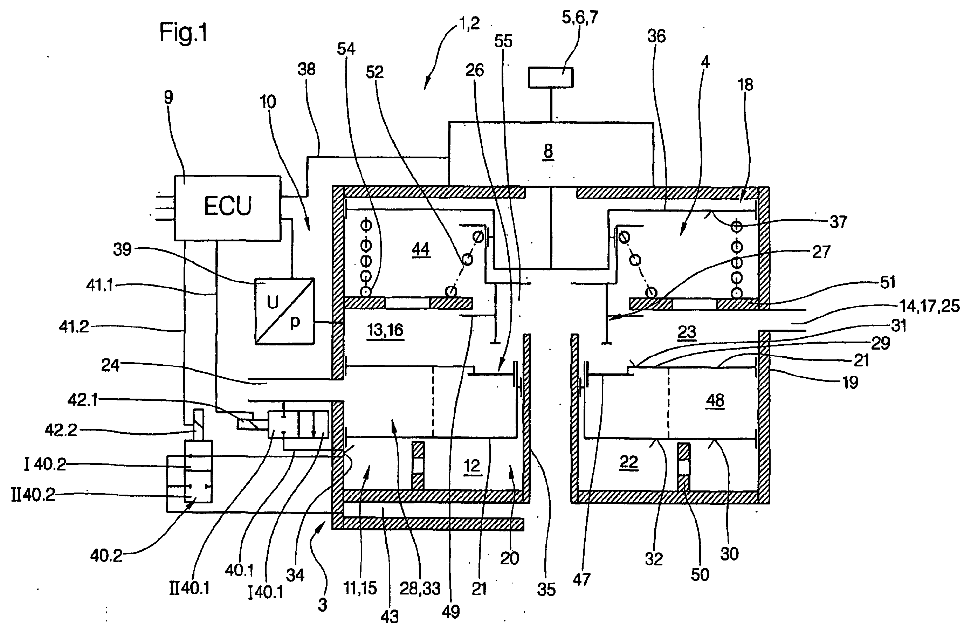

Figur 1 verdeutlicht in schematisch vereinfachter Darstellung den Grundaufbau einer Steuervorrichtung 1, insbesondere Drucksteuervorrichtung für ein Bremssystem, insbesondere ein Fahrzeugbremssystem, in Form eines Zentralmoduls 2 mit einer erfindungsgemäß ausgeführten kombinierten elektro-pneumatisch oder mechanisch betätigbaren Ventileinrichtung 18. Die Aufgabe der Steuervorrichtung 1 besteht dabei darin, den aus einem Fahrerwunsch nach Bereitstellung eines Bremsmomentes bestimmter Größe erforderlichen Druck einzustellen, zu steuern oder zu regeln. Unter Steuervorrichtung wird dabei die Gesamtheit aus Steuergeräten und Stellgliedern, einschließlich der Verbindungen zwischen diesen verstanden. Die Steuervorrichtung 1 umfasst einen ersten, elektro-pneumatischen Druckkreis 3 und einen zweiten, mechanisch-pneumatischen Druckkreis 4. Dabei bedeutet elektro-pneumatisch, daß die Erzeugung des am entsprechenden Stellglied des Bremssystems, beispielsweise am Betriebsbremszylinder erforderlichen Druckes pneumatisch und die Einstellung bzw. Steuerung oder Regelung elektronisch erfolgen. Pneumatisch oder exakter bezeichnet auch mechanisch-pneumatisch beinhaltet die Erzeugung des erforderlichen Druckes pneumatisch und die Einstellung bzw. Steuerung oder Regelung mechanisch. Des weiteren sind mindestens eine Einrichtung 5 zur Vorgabe eines Fahrerwunsches nach Bereitstellung bzw. Erzeugung eines Bremsmomentes bestimmter Größe, im allgemeinen ein vom Fahrer bedienbares Betätigungselement 6 und Übertragungselemente, beispielsweise in Form eines Betätigungsstößels 7, welcher mit einem Bremswertgeber 8 gekoppelt ist, vorgesehen. Der erste, elektro-pneumatische Druckkreis 3, umfaßt eine Steuereinrichtung 9 und einen Druckregelmodul 10. Die Funktion des Druckregelmoduls 10 besteht darin, den am Betriebsbremszylinder erforderlichen Druck einzuregeln. Das Druckregelmodul 10 ist hinsichtlich seiner Funktion zwischen der Steuereinrichtung 9 und dem Betriebsbremszylinder angeordnet. Der Druckregelmodul 10 umfaßt mindestens eine elektro-pneumatisch steuerbare Ventileinrichtung 11 mit wenigstens einer Steuerkammer 12 und einer Arbeitskammer 13, welche mit einem, hier im einzelnen nicht dargestellten Betriebsbremszylinder über einen Anschluß 14 koppelbar ist. Die Steuereinrichtung 9 kann dabei in Form eines Steuergerätes ausgeführt sein. Der zweite, pneumatischen Druckkreis umfasst eine mechanisch betätigbare Betriebsbremsventileinrichtung 15, umfassend eine Arbeitskammer 16, die mit dem Betriebsbremszylinder koppelbar ist, beispielsweise über den Anschluß 17. Erfindungsgemäß werden die Funktionen der elektro-pneumatisch steuerbaren Ventileinrichtung 11 und der Betriebsbremsventileinrichtung 15 in einer kombinierten elektro-pneumatisch oder mechanisch betätigbaren Ventileinrichtung 18 zusammengefaßt. Diese umfaßt ein Ventil 26, umfassend ein, einen Ventilsitz 27 bildendes Element, nachfolgend Ventilsitzelement genannt, und ein Ventilglied 28. Ventilglied 28 und das den Ventilsitz 27 tragende Element sind in einer ersten Kammer 20 im Gehäuse 19 koaxial zueinander angeordnet und verschiebbar, insbesondere gegeneinander, geführt. Das Ventilglied 27 wird von einem Kolbenelement 21 in Form eines Manschettenteils 33, welches als manschettentragender Doppelkolben ausgeführt ist, und das die erste Kammer 20 in eine Steuerkammer 22 und eine Arbeitskammer 23 unterteilt, gebildet. Der Doppelkolben mit einem Manschettenteil 33 ist zu diesem Zweck druckdicht im Gehäuse 19 geführt. Die Arbeitskammer 23 entspricht dabei der Arbeitskammer 13 der elektro-pneumatisch steuerbaren Ventileinrichtung 11 und der Arbeitskammer 16 der Betriebsbremsventileinrichtung 15. Die Steuerkammer 22 bildet funktionsmäßig die Steuerkammer 12 der elektro-pneumatisch steuerbaren Ventileinrichtung 11. Der Arbeitskammer 23 ist ein Anschluß 24 zur Koppelung mit einer Druckmittelquelle oder Druckmittelsenke und ein Anschluß 25 zum Verbraucher, d.h. mindestens einem Bremszylinder zugeordnet. Der Anschluß 25 entspricht somit dem Anschluß 14 der elektro-pneumatisch steuerbaren Ventileinrichtung 11 und dem Anschluß 17 der Betriebsbremsventileinrichtung 15. Beide sind erfindungsgemäß ebenfalls zusammengefaßt. In Analogie gilt dies auch für den Anschluß 24, welcher die Zusammenfassung der Anschlüsse von Betriebsbremsventileinrichtung 15 und der elektro-pneumatisch steuerbaren Ventileinrichtung 11 mit einer Druckmittelquelle oder Druckmittelsenke darstellt. Das Ventilglied 28 ist zwischen dem Anschluß 24 zur Koppelung mit einer Druckmittelquelle und der Arbeitskammer 23 angeordnet und druckdicht im Gehäuse 19 geführt.
Bei Ausführung des Ventilgliedes 28 als Manschettenteil 33 in Form eines Doppelkolbens umfaßt dieses zwei miteinander gekoppelte Kolbenteile - ein erstes Kolbenteil 30 und ein zweites Kolbenteil 29. Die druckdichte Führung der beiden Kolbenteile 29 und 30 erfolgt zumindest an den äußeren Gehäuseinnenwänden 34. Die einzelnen Kolbenteile 29 und 30 können dabei als separate Bauelemente, welche im Einbauzustand miteinander verbunden werden, ausgeführt werden oder aber von einer integralen Baueinheit gebildet werden. Eine an der Stimfläche ausgebildete Kolbenfläche 31 des zweiten Kolbenteiles 29 ist zur Arbeitskammer 23 gerichtet, während eine an der vom Manschettenteil 33 weggerichteten Stirnseite ausgebildete Kolbenfläche 32 des ersten Kolbenteiles 30 zur Steuerkammer 22 gerichtet ist. Die Arbeitskammer 23 ist über die im Kolbenelement 21 integrierte Manschette 47 mit der Druckmittelquelle oder Druckmittelsenke verbunden. Diese ist zwischen den beiden Kolbenteilen 29 und 30 koaxial zu diesen angeordnet und in der ersten Kammer 20 in Richtung der Gehäuselängsachse zum Kolbenelement 21, insbesondere der Führung der Kolbenteile 30 und 29 verschiebbar. Zu diesem Zweck sind die beiden Kolbenteile 29 und 30 hinsichtlich ihrer Abmessungen der Kolbenflächen 31 und 32 unterschiedlich ausgeführt. Während das erste Kolbenteil 30 dicht gegenüber der Steuerkammer 22 im Gehäuse 19 verschiebbar und parallel zur Betätigungsrichtung der Betätigungseinrichtung 6 geführt ist, vorzugsweise an der Gehäuseinnenwand 34 und einem speziell im inneren der Ventileinheit 18 dafür vorgesehenen Innenwandelement 35, ist das zweite Kolbenteil 29 direkt nur an der Gehäuseinnenwand 34 druckdicht verschiebbar geführt, erstreckt sich jedoch nicht bis in den Bereich des Innenwandelementes 35. Zwischen beiden Kolbenteilen 29 und 30 ist zur Sperrung oder Freigabe der Verbindung der Arbeitskammer 23 mit der Druckmittelquelle oder Druckmittelsenke die Manschette 47 angeordnet. Das Kolbenelement 21 ist derart ausgeführt, daß Druckmittel über einen Zwischenraum 48 zwischen beiden Kolbenteilen 29 und 30 oder bei integraler Bauweise zwischen den voneinander weggerichteten Kolbenflächen 32 und 31 über eine in das Kolbenelement 21 eingearbeitete Verbindungsleitung oder einen Verbindungskanal zur Arbeitskammer 23 führbar ist. Das Kolbenelement 21 ist dabei derart in der ersten Kammer 20 angeordnet, daß dieser entsprechend den einzelnen Funktionsstellungen eine Verbindung zwischen dem Anschluß 24 und der Arbeitskammer 23 über eine Öffnung in der Wand des Gehäuses 19 und die Ventileinrichtung 26 ermöglicht.

Die Betätigung der Ventileinrichtung 26 erfolgt im Betrieb des ersten, elektropneumatischen Druckkreises 3 über das Kolbenelement 21 und im zweiten, mechanisch-pneumatischen Druckkreis 4 zumindest indirekt über die Betätigungseinrichtung 6, d.h. über ein mit diesem gekoppeltes Übertragungselement. Bezüglich der konkreten Ausführung bestehen mehrere Möglichkeiten. Zur Realisierung der mechanischen Drucksteuerung über den zweiten, mechanisch-pneumatischen Druckkreis 4 ist es erforderlich, den Druck in der Arbeitskammer 23 entsprechend der Betätigung der Betätigungseinrichtung 6 einzustellen. Dabei wirkt im dargestellten Fall die Betätigungseinrichtung 6 über Übertragungselemente auf die Ventileinrichtung 26, insbesondere den Ventilsitz 27 zur Steuerung der Druckzufuhr zum Arbeitsraum 23.

Die Mittel 3 zur pneumatischen Drucksteuerung umfassen einen mit dem Betätigungselement 6 beziehungsweise dem Betätigungsstößel 7 gekoppelten Pedalkraftkolben 36, welcher am Ventilsitz 27 der Ventileinrichtung 26 wirksam wird und damit die Druckzufuhr zum Arbeitsraum 23 steuert. Pedalkraftkolben 36 und Ventilsitz 27 sind koaxial zur Betätigungsachse des Betätigungsstößels 7 angeordnet. Der Pedalkraftkolben 36 ist in einer zweiten Kammer 44 im Gehäuse 19 angeordnet. Diese ist über eine Zwischenwand 51 und den durch diese geführten Ventilsitz 27 von der ersten Kammer 20 getrennt. Der Pedalkraftkolben 36 stützt sich über mindestens eine Federeinheit 54 an der Zwischenwand 51 ab.

Die Vorgabe eines Fahrerwunsches zur Erzeugung eines bestimmten Bremsmomentes erfolgt über ein entsprechendes Betätigungselement 6, welches entweder direkt oder über einen Betätigungsstößel 7 mit einem Bremswertgeber 8 gekoppelt ist. Der Bremswertgeber 8 ist mit einem Pedalkraftkolben 36 verbunden, welcher auf seiner zur Betätigungseinrichtung 6 entgegengesetzt ausgerichteten Fläche 37 mit einem Gegendruck beaufschlagbar ist. Dabei wird am Bremswertgeber 8 eine, den Fahrerwunsch nach Erzeugung eines bestimmten Bremsmomentes wenigstens mittelbar beschreibenden Größe, welche beispielsweise in Form eines Weges, eines Winkels oder eines Druckes erfaßt werden kann, ein elektrisches Signal generiert, welches der elektronischen Steuereinrichtung 4 an einem Eingang 38 zuführbar ist. Aus dem Fahrerwunsch wird der am Betriebsbremszylinder erforderliche Druck ermittelt und entsprechende Stellgrößen zur Einstellung des Druckes an der elektronischen Steuereinrichtung 4 erzeugt und ausgegeben. Im dargestellten Fall sind ein Spannungs-/Druckwandler 39 und zwei Steuerventileinrichtungen - eine erste Steuerventileinrichtung 40.1 und eine zweite Steuerventileinrichtung 40.2 - vorgesehen. Beide Ventileinrichtungen sind als 1/2-Wegeventil ausgeführt. Die Steuerung beziehungsweise Betätigung der Steuerventileinrichtungen erfolgt elektromagnetisch, in dem an den Ausgängen 41.1 beziehungsweise 41.2 der elektronischen Steuereinrichtung 4 entsprechende Stellsignale zur Beaufschlagung der Stelleinrichtungen 42.1 beziehungsweise 42.2 der Steuerventileinrichtungen 40.1 beziehungsweise 40.2 ausgegeben werden. Die erste Steuerventileinrichtung 40.1 dient dabei der Kopplung zwischen der Verbindung zwischen der Druckmittelquelle 24 und der Steuerkammer 22. Die zweite Steuerventileinrichtung 40.2 dient der Kopplung zwischen Steuerkammer 22 und einem Entlastungsraum, insbesondere Schalldämpfer 43 oder der Umgebung.

Die beiden Ventileinrichtungen - erste Ventileinrichtung 40.1 und zweite Ventileinrichtung 40.2 - sind beispielsweise als 1/2-Wegeventile ausgeführt, welche vorzugsweise elektromagnetisch betätigt, insbesondere über die Steuereinrichtung 9 angesteuert werden. Die erste Funktionsstellung I_{40.1} der ersten Ventileinrichtung 40.1 dient dabei der Steuerung des Druckes auf beiden Seiten des Kolbenelementes 28, insbesondere in der Steuerkammer 22. Die zweite Stellung II_{40.1} der ersten Steuerventileinrichtung 40.1 dient dabei dem Halten der Drücke an beiden Kolbenflächen 31 und 32 des Kolbens 28. Die zweite Steuerventileinrichtung 40.2 dient der Verminderung des Druckes in der Steuerkammer 22, welcher auf die zweite Kolbenfläche 32 wirkt. Diese wird über eine Druckentlastungseinrichtung in Form eines Schalldämpfers 43 entlastet.

Die Bewegbarkeit von Ventilsitz 27 und Ventilglied 28 parallel zur Betätigungsachse der Betätigungseinrichtung, d.h. zur theoretisch verlängerten Achse der an der Ventileinrichtung 18 wirkenden Kraft, welche über das Betätigungselement 6 aufgebracht wird, wird durch diesen zugeordnete Anschläge 49 und 50 begrenzt. Diese können am Ventilsitz 27, dem Ventilglied 28 oder aber an der Innenwand 34 des Gehäuses 19 angeordnet sein. Im dargestellten Fall sind der Anschlag 49 am Ventilsitz 27 und der Anschlag 50 an der Gehäuseinnenwand 34 angeordnet. Beide begrenzen jeweils die Bewegbarkeit des ihnen zugeordneten Elementes - Ventilsitz 27 oder Ventilkolben 28 - in Richtung des Gehäuses 19.

Ventilsitz 27 und Ventilglied 28 sowie die innere Gehäusewand, an welcher das erste Kolbenteil 30 geführt ist, sind derart zueinander angeordnet und ausgelegt, daß bei Wirkverbindung zwischen Ventilsitz und Ventilglied der Anschluß 55 bzw. die Verbindung zwischen Arbeitskammer 23 und Entlastungsraum 43 versperrt sind. Dazu ist beispielsweise eine innere Gehäusewand 56 vorgesehen, an welcher das Ventilglied 28 geführt ist und welche koaxial zu den übrigen Elementen der Ventileinrichtung 18 angeordnet ist.

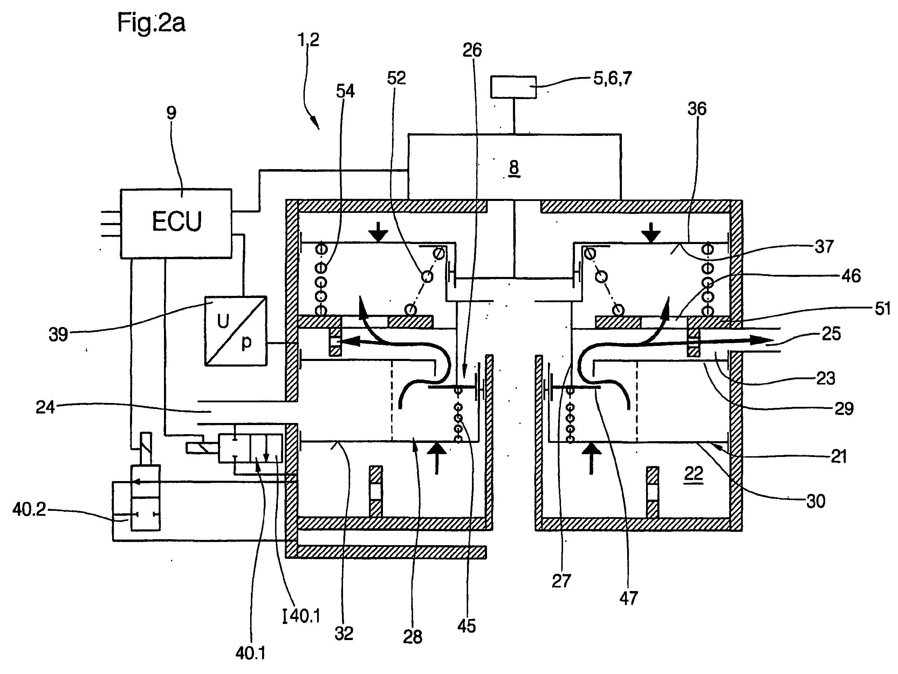

Die Funktionsweise der in Figur 1 dargestellten Steuervorrichtung 1 ist in den Figuren 2a bis 2e beschrieben. Der Druckverlauf ist durch Pfeile gekennzeichnet.

Die Figur 2a verdeutlicht dabei den elektro-pneumatischen Druckaufbau über den elektro-pneumatischen Druckkreis 3. Daraus wird ersichtlich, daß bei Vorliegen eines Fahrerwunsches nach Erzeugung eines bestimmten Bremsmomentes am Bremswertgeber 8 ein entsprechendes Signal für die elektronische Steuereinrichtung 4 generiert wird, welche wiederum über den Spannungs-/Druckwandler 39 und die Steuerventileinrichtungen 40.1, 40.2 den Druck in der Steuerkammer 22 einsteuert. Der Druck in der Steuerkammer 22 wirkt dabei auf die von der Arbeitskammer 23 weggerichtete Kolbenfläche 32 am Kolbenteil 30 und somit auf den Doppelkolben. Die koaxial zum Doppelkolben angeordnete und verschiebbar geführte Manschette 47 stützt sich vorzugsweise über mindestens eine Federeinheit 45 am ersten Kolbenteil 30 ab. Die aufgrund des Druckes in der Steuerkammer 22 bewirkte Verschiebung am Ventilglied 28, insbesondere dem Kolbenelement 21 führt bei Kontaktierung der Manschette 47 mit dem Ventilsitz 27 zu einer Verschiebung der Manschette 47 gegenüber dem ersten und dem zweiten Kolbenteil 30, 29 und damit zur Herstellung einer leitenden Verbindung zwischen dem Anschluß 24 zur Kopplung mit der Druckmittelquelle und dem Arbeitsraum 23 über den Zwischenraum 48 im Manschettenteil 33. Das den Ventilsitz 27 tragende Element ist dabei derart ausgebildet, daß dieses einen entsprechenden Druckmittelstrom zur Arbeitskammer 23 zuläßt und des weiteren einen Übertritt von der Arbeitskammer 23 zum Betriebsbremszylinder am Anschluß 25 ermöglicht. Des weiteren wird über mindestens eine Durchgangsöffnung 46 in der Zwischenwand 51 die entgegen der Betätigungsrichtung der Betätigungseinrichtung 6 gerichtete Kolbenfläche 37 des Pedalkraftkolbens 36 mit dem Druck in der Arbeitskammer 23 beaufschlagt. Der Fahrer erhält durch die Gegenkraft am Pedalkraftkolben 36 somit ein Feedback bezüglich der erzielten Bremswirkung. Der Ventilsitz 27 ist am Pedalkraftkolben 36 verschiebbar geführt. In diesem Zustand befindet sich der Ventilsitz 27 in seiner von Seiten der Betätigungseinrichtung 6 unbeaufschlagten Stellung. In dieser stützt er sich über eine Federeinheit 52 in der zweiten Kammer 44 an der Zwischenwand 51 ab. Der Anschlag 49 begrenzt dessen Bewegbarkeit in Richtung zweite Kammer 44.

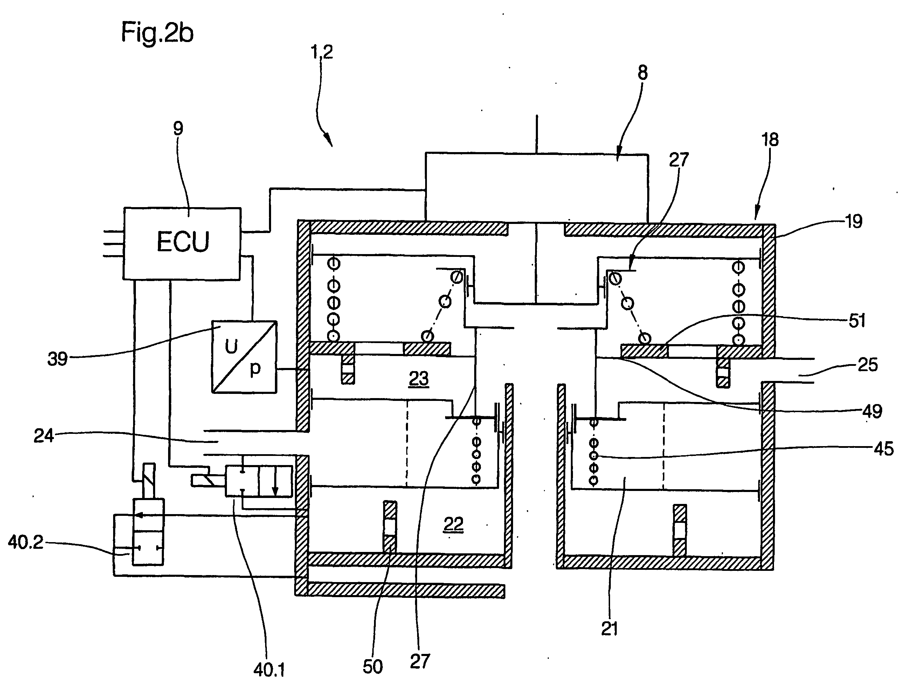

Figur 2b verdeutlicht dem gegenüber die Funktionsstellungen der einzelnen Elemente für eine elektro-pneumatische Teilbremsung. Auch hier erfolgt über den Bremswertgeber 8 eine Generierung eines entsprechenden Signals für die elektronische Steuervorrichtung 9 und damit der Bereitstellung eines zur Erzeugung des geforderten Druckes erforderlichen Steuerdruckes in der Steuerkammer 22. Dieser bewirkt, daß das Kolbenelement 24 sich in Richtung einer Erhöhung des Druckes in der Arbeitskammer 29 bewegt. Dabei bewegt sich die Manschette 47 in Richtung des Ventilsitzes 27. Eine Kopplung zwischen Arbeitskammer 23 und Druckmittelquelle erfolgt jedoch nicht, da aufgrund der Nichtbetätigung der Manschette 47 über den Zwischenraum 46 aus der Druckmittelquelle kein Druckmittel in den Arbeitsraum 23 eingebracht werden kann.

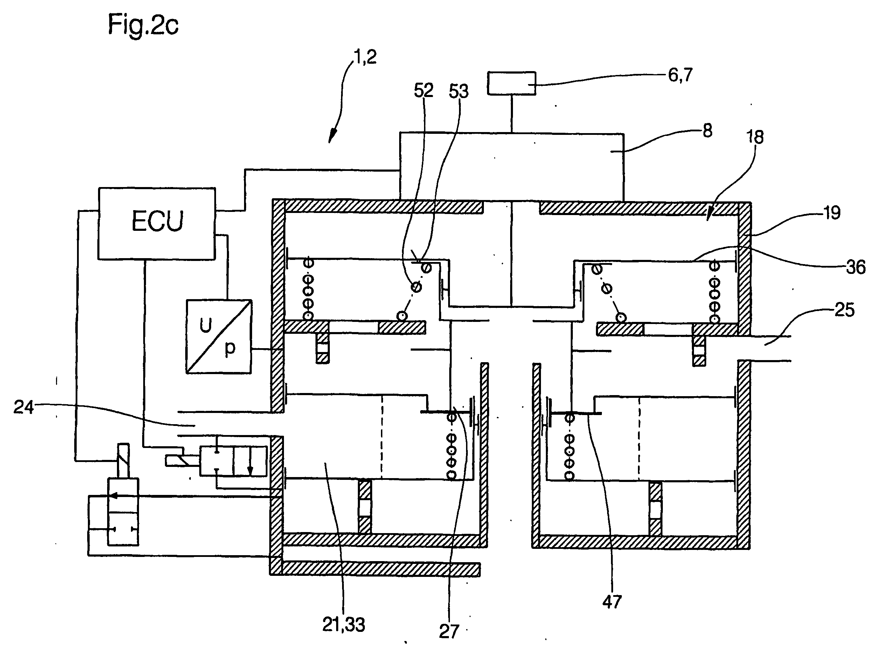

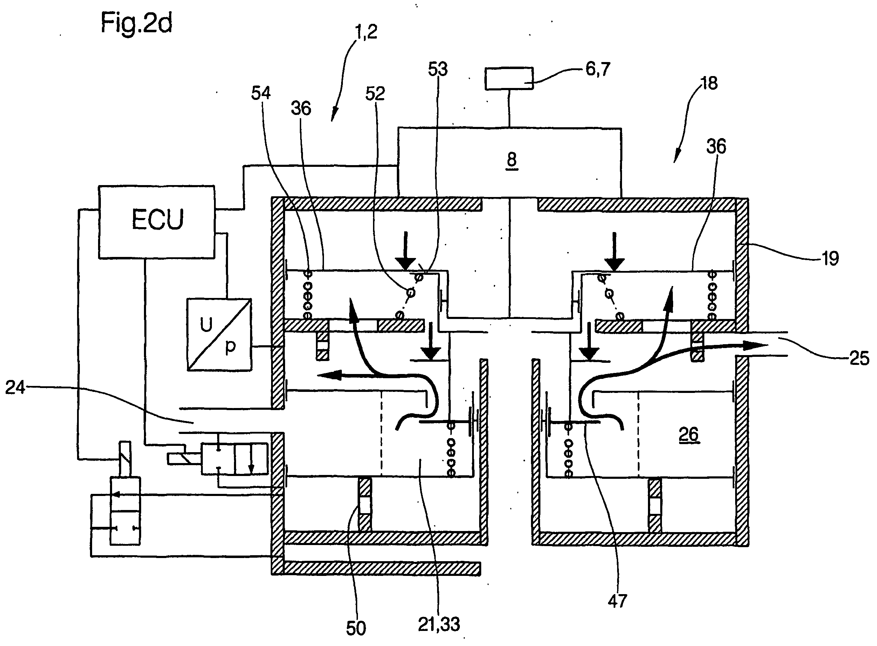

Die Figuren 2c und 2d verdeutlichen die einzelnen Funktionsstellungen der einzelnen Elemente der kombinierten elektro-pneumatisch oder mechanisch betätigbaren Ventileinrichtung 18 bei mechanischer Teil- und Vollbetätigung. In diesen Funktionszuständen befindet sich das Ventilglied 28 am Anschlag 50, d.h. in seiner gegenüber der äußeren Gehäuseinnenwand 34 äußersten Position. Die Teilbetätigung bewirkt, daß der mit dem Betätigungselement 6 beziehungsweise dem Betätigungsstößel 7 gekoppelte Pedalkraftkolben 36 durch die Kraft am Betätigungsstößel 7 beaufschlagt wird und gegenüber dem den Ventilsitz 27 bildenden Element verschoben wird, was aufgrund der begrenzten Führung des Ventilsitzes 27 im Pedalkraftkolben 36 bis vor einen, am den Ventilsitz 27 bildenden Element vorgesehenen Anschlag 53 möglich ist. Bei Kontaktierung des Anschlages 53 wird dann der Ventilsitz 27 bzw. das den Ventilsitz bildende Element ebenfalls mitgenommen. Diese Verschiebung erfolgt dabei in Richtung des Manschettenteiles 33, insbesondere in Richtung der Manschette 47 und bis zu dieser, wobei eine Betätigung, insbesondere Verschiebung der Manschette 47 noch nicht erfolgt. Erst bei weiterer Beaufschlagung von Pedalkraftkolben 36 und damit der Herstellung der Zwangsführung zwischen Pedalkraftkolben 36 und Ventilsitz 27 in Richtung des Manschettenteiles 33 und Wirkung des Ventilsitzes 27 auf die Manschette 47 im Sinne einer Verschiebung oder Auslenkung erfolgt durch Herstellung einer Druckmittelverbindung zwischen der Druckmittelquelle und dem Arbeitsraum 23 beziehungsweise dem mit dem Betriebsbremszylinder gekoppelten Auslaß 25 eine Druckbereitstellung für den Betriebsbremszylinder. Die Betätigung erfolgt dabei rein mechanisch und der Druckaufbau rein pneumatisch. Dieser Funktionszustand ist in Figur 2d dargestellt.

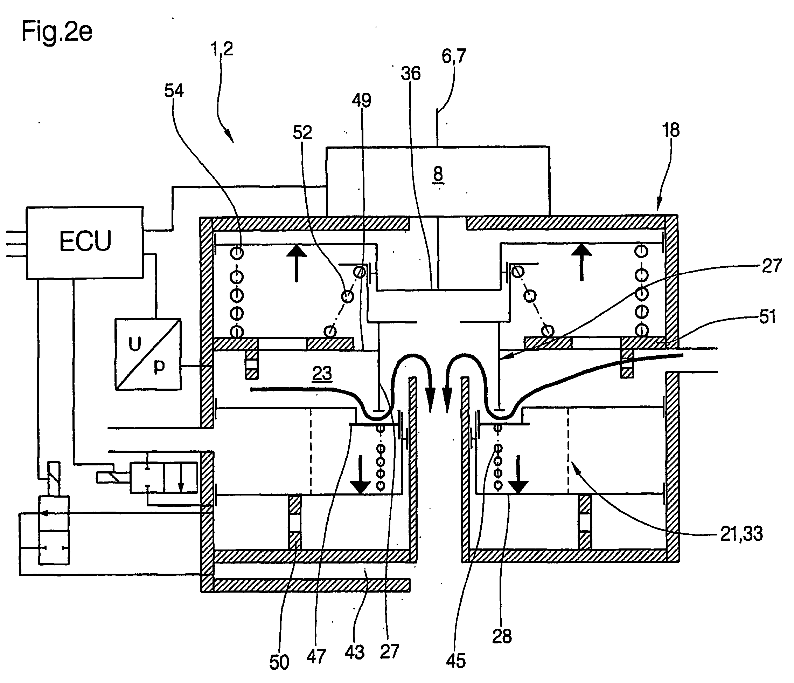

Figur 2e verdeutlicht die kombinierte elektronisch-pneumatisch oder mechanisch betätigbare Ventileinrichtung 18 im unbetätigten Zustand, welcher durch den Abbau des Druckes in der Ventileinrichtung 18 charakterisiert ist. In diesem Funktionszustand befinden sich Ventilsitz 27 und Ventilglied 28 an den ihnen im Gehäuse 19 zugeordneten Anschlägen 49 und 50 und stehen nicht miteinander in Wirkverbindung. Die Entfernung zwischen beiden ist maximal. In diesem Zustand gibt der Ventilsitz die Verbindung 55 zwischen Arbeitsraum und Entlastungsraum 43 frei. Der Druckabbau erfolgt von der Arbeitskammer 23 in den Entlastungsraum in Form des Schalldämpfers 43. Desweiteren bewirkt der im System noch vorhandene Druck eine Verschiebung von entlastetem Pedalkraftkolben 36 in seine Ausgangslage. Die Manschette 47 wird über die vorgespannte Federeinheit 45 und der Ventilsitz 27 wird über die Federeinheit 52 in ihrer Ausgangslage gehalten.

### Bezugszeichenliste

- 1: Steuervorrichtung
- 2: Zentralmodul
- 3: elektro-pneumatischer Druckkreis
- 4: mechanisch-pneumatischer Druckkreis
- 5: Einrichtung zur Vorgabe eines Fahrerwunsches nach Erzeugung eines Bremsmomentes bestimmter Größe
- 6: Betätigungselement
- 7: Betätigungsstößel
- 8: Bremswertgeber
- 9: Steuereinrichtung, Steuergerät
- 10: Druckregelmodul
- 11: elektro-pneumatisch steuerbare Ventileinrichtung
- 12: Steuerkammer
- 13: Arbeitskammer
- 14: Anschluß von der Arbeitskammer 13 zur Kopplung mit dem Betriebsbremszylinder
- 15: Betriebsbremsventileinrichtung
- 16: Arbeitskammer
- 17: Anschluß
- 18: Ventileinheit
- 19: Gehäuse
- 20: erste Kammer
- 21: Kolbenelement
- 22: Steuerkammer
- 23: Arbeitskammer
- 24: Anschluß zur Kopplung mit Druckmittelquelle oder Druckmittesenke
- 25: Anschluß zum Verbraucher
- 26: Ventileinrichtung
- 27: Ventilsitzelement
- 28: Ventilglied
- 29: erstes Kolbenteil
- 30: zweites Kolbenteil
- 31: Kolbenfläche
- 32: Kolbenfläche
- 33: Manschettenteil
- 34: Gehäuseinnenwand
- 35: Innenwandelement
- 36: Pedalkraftkolben
- 37: Fläche
- 38: Eingang
- 39: Spannungs-/Druckwandler
- 40.1: erste Steuerventileinrichtung
- 40.2: zweite Steuerventileinrichtung
- 41.1: Ausgang
- 41.2: Ausgang
- 42.1: Stelleinrichtung
- 42.2: Stelleinrichtung
- 43: Schalldämpfer
- 44: zweite Kammer
- 45: Federeinheit
- 46: Verbindung
- 47: Manschette
- 48: Zwischenraum
- 49: Anschlag.
- 50: Anschlag
- 51: Zwischenwand
- 52: Federeinheit
- 53: Anschlag
- 54: Federeinheit
- 55: Anschluß

## Patentansprüche

1. Kombinierte elektro-pneumatisch und mechanisch betätigbare Ventileinrichtung (18) für Bremssysteme mit mindestens zwei Druckkreisen - einem ersten elektro-pneumatischen Druckkreis (3) und einem zweiten, mechanisch-pneumatischen Druckkreis (4) ;
1.1 mit einer in einem Gehäuse (19) angeordneten Arbeitskammer (23);
1.2 mit wenigstens einem Anschluß (24) zur Kopplung mit einer Druckmittelquelle oder Druckmittelsenke, mit einem Anschluß (25) zur Kopplung der Arbeitskammer (23) mit mindestens einem Betriebsbremszylinder und einen Anschluß zu einem Entlastungsraum (43);
1.3 mit einem indirekt über weitere Übertragungselemente oder direkt mit einer Betätigungseinrichtung (6) koppelbaren Ventilsitz (27) und einem Ventilglied (28);
1.4 Ventilsitz (27) und Ventilglied (28) sind koaxial zueinander und in einer Kammer (20) in Richtung der Längsachse des Gehäuses (19) zueinander oder gegeneinander verschiebbar geführt und unterteilen die Kammer (20) in eine Steuerkammer (22) und die Arbeitskammer (23);
1.5 das Ventilglied (28) ist zwischen dem Anschluß (24) zur Koppelung mit einer Druckmittelquelle oder Druckmittelsenke und der Arbeitskammer (23) angeordnet und druckdicht im Gehäuse (19) geführt;
1.6 mit dem Ventilsitz (27) und dem Ventilglied (28) zugeordneten Anschlägen (49, 50) zur Begrenzung der Verschiebbarkeit gegenüber dem Gehäuse (19);
**dadurch gekennzeichnet, dass**
- das Ventilglied (28) als Manschettenteil (33) ausgebildet ist; und
- das Ventilglied (28) einen Doppelkolben umfaßt mit zwei druckdicht im Gehäuse (19) geführten Kolbenteilen (29, 30) und integrierter Verbindungsleitung und/oder einem Zwischenraum (48) und mindestens eine, an einem Kolbenteil (30) geführte und koaxial zu diesem angeordnete Manschette (47) zur wahlweisen Freigabe oder dem Verschluß der Verbindung zwischen dem Anschluß (24) zur Druckmittelquelle oder Druckmittelsenke und dem Arbeitsraum (23).

2. Kombinierte elektro-pneumatisch und mechanisch betätigbare Ventileinrichtung (18) nach Anspruch 1, **dadurch gekennzeichnet, daß** der Doppelkolben als integrale Baueinheit mit eingearbeitetem Zwischenraum (46) ausgeführt ist.

3. Kombinierte elektro-pneumatisch und mechanisch betätigbare Ventileinrichtung (18) nach einem der Ansprüche 1 oder 2, **dadurch gekennzeichnet, daß** die Manschette (47) gegenüber einem Kolbenteil (30) über eine Federeinheit (45) abgestützt ist.

4. Kombinierte elektro-pneumatisch und mechanisch betätigbare Ventileinrichtung (18) nach einem der Ansprüche 1 bis 3, **gekennzeichnet durch** die folgenden Merkmale:
4.1 das erste Kolbenteil (30) begrenzt mit seiner zur Gehäuseinnenwand (34) gerichteten Stirnseite die Steuerkammer (22), der zweite Kolbenteil (29) begrenzt die Arbeitskammer (23);
4.2 der zweite Kolbenteil (29) ist im Bereich seines Außendurchmessers direkt an der äußeren Gehäuseinnenwand (34) und im Bereich seines Innendurchmessers über die Koppelung mit dem ersten Kolbenteil (30) im Gehäuse (19) geführt;
4.3 die Manschette ist am ersten Kolbenteil (30) in Richtung der Längsachse des Gehäuses (19) zu diesem verschiebbar geführt und liegt in mindestens einer Funktionsstellung am zweiten Kolbenteil (29) im Bereich von dessen Innendurchmesser druckdicht an.

5. Kombinierte elektro-pneumatisch und mechanisch betätigbare Ventileinrichtung (18) nach einem der Ansprüche 1 bis 4, **dadurch gekennzeichnet, daß** der Ventilsitz (27) und das Ventilglied (28) derart ausgeführt und ausgelegt sind, daß in einem Funktionszustand, welcher durch den Nichtkontakt beider Elemente charakterisiert ist, eine Verbindung (55) zwischen Arbeitsraum (23) und Entlastungsraum (43) freigegeben wird.

6. Steuervorrichtung (1) für ein Bremssystem, insbesondere Drucksteuervorrichtung für ein Fahrzeugbremssystern, mit mindestens einem Druckkreis, **dadurch gekennzeichnet, daß** der mindestens eine Druckkreis (3, 4) im Normalbetrieb elektro-pneumatisch betätigt wird und zur Sicherheit bei Ausfall der Elektronik zusätzlich auch pneumatisch betätigt werden kann
6.1 mit einem Bremswertgeber (8) und einem mit diesen gekoppelten Betätigungselement (5, 6; 6.2) zur Vorgabe des Fahrerwunsches nach Bereitstellung eines Bremsmomentes bestimmter Größe;
6.2 der Druckkreis (3; 3.2) umfaßt für seine elektro-pneumatische Steuerung eine Steuereinrichtung (9; 9.2) und einen Druckregelmodul (10; 10.2) mit mindestens einer elektro-pneumatisch steuerbaren Ventileinrichtung (11);
6.3 der Druckkreis (4) umfaßt für seine pneumatische Notsteuerung eine mechanisch betätigbare Betriebsbremsventileinrichtung (15), wobei
6.4 die steuerbare Ventileinrichtung (11) des Druckkreises (3) und die Betriebsbremsventileinrichtung (15) von einer kombinierten elektro-pneumatisch und mechanisch betätigbaren Ventileinrichtung (18) nach einem der Ansprüche 1 bis 5 gebildet werden.

7. Steuervorrichtung (1; 1.2) nach Anspruch 6, **gekennzeichnet durch** die folgenden Merkmale:
7.1 das Druckregelmodul (10; 10.2) umfaßt zwei Steuerventile (40.1; 40.2);
7.2 die Steuerventile (40.1; 40.2) sind in Verbindungsleitungen zwischen Arbeitskammer (23) und Steuerkammer (22) und Steuerkammer (22) und Umgebung oder einem Entlastungsraum (43) angeordnet.

8. Steuervorrichtung (1) für ein Bremssystem nach einem der Ansprüche 6 oder 7, **dadurch gekennzeichnet, daß** Steuereinrichtung (9), Bremswertgeber (8) und kombinierte elektro-pneumatisch oder mechanisch betätigbare Ventileinrichtung (18) zu einer baulichen Einheit zusammengefaßt sind.

9. Steuervorrichtung (1) für ein Bremssystem nach Anspruch (8), **dadurch gekennzeichnet, daß** Steuereinrichtung (9), Bremswertgeber (8) und kombinierte elektro-pneumatisch oder mechanisch betätigbare Ventileinrichtung (18) in unmittelbarer baulicher Nähe zueinander angeordnet sind.

10. Steuervorrichtung (1) für ein Bremssystem nach Anspruch 8 oder 9, **dadurch gekennzeichnet, daß** Steuereinrichtung (9), Bremswertgeber (8) und kombinierte elektro-pneumatisch oder mechanisch betätigbare Ventileinrichtung (18) eine integrale Baueinheit bilden.

11. Steuervorrichtung (1) für ein Bremssystem nach einem der Ansprüche 8 bis 10, **dadurch gekennzeichnet, daß** Steuereinrichtung (9), Bremswertgeber (8) und kombinierte elektro-pneumatisch oder mechanisch betätigbare Ventileinrichtung (18) an ihren Gehäusen aneinander angeflanscht sind.

## Claims

1. Combined electro-pneumatically and mechanically operable valve system (18) for brake systems comprising two pressure circuits - one first electro-pneumatic pressure circuit (3) and a second mechanical-pneumatic pressure circuit (4);
1.1 including a working chamber (23) disposed in a housing (19);
1.2 at least one connector (24) for coupling to a source of pressurised medium or drain of pressurised medium, having a connector (25) for coupling said working chamber (23) to at least one service brake cylinder and one connector leading to a relief volume (43);
1.3 a valve seat (27) adapted to be indirectly coupled to further transmission elements or directly to an actuator means (6) and a valve member (28);
1.4 wherein said valve seat (27) and said valve member (28) are guided coaxially relative to each other or for displacement relative to each other whilst they subdivide said chamber (20) into a control chamber (22) and said working chamber (23);
1.5 wherein said valve member (28) is disposed between said connector (24) for coupling to a source of pressurised medium or sink of pressurised medium and said working chamber (23) whilst it is guided in said housing (19) so as to be pressure-tight;
1.6 including stop lugs (49, 50) disposed on said valve seat (27) and said valve member (28) for restricting displaceability relative to said housing (19),
**characterised in that**
- said valve member (28) is configured as sleeve part (33) and
- that said valve member (28) comprises a twin piston with two piston parts guided in said housing (19) so as to be pressure-tight, as well as an integrated connecting line and/or a space (48) and at least one sleeve (47) guided on one piston part (30) and disposed coaxially relative to the latter for optional release or closure of the connection between said connector (24) leading to said source of pressurised medium or said sink of pressurised medium and said working space (23).

2. Combined electro-pneumatically and mechanically operable valve system (18) according to Claim 1, **characterised in that** said twin piston is configured as integral structural unit into which a space (45) is machined.

3. Combined electro-pneumatically and mechanically operable valve system (18) according to any of the Claims 1 or 2, **characterised in that** said sleeve (47) is supported via a spring unit (45) opposite to a piston part (30).

4. Combined electro-pneumatically and mechanically operable valve system (18) according to any of the Claims 1 to 3, **characterised by** the following features:
4.1 said first piston part (30) limits said control chamber (22) by its face side facing the inner housing wall (34) whilst said second piston part (29) limits said working chamber (23);
4.2 said second piston part (29), in the zone of its outside diameter, is guided directly on the outside inner housing wall (34) and, in he zone of its inner diameter, via the coupling to said first piston part (30) in said housing (19);
4.3 said sleeve is guided on said first piston part (30) in a direction along the longitudinal axis of said housing (19) for displacement relative to the latter, and in at least one functional position, it bears against said second piston part (29) in the zone of the inner diameter thereof so as to be pressure-tight.

5. Combined electro-pneumatically and mechanically operable valve system (18) according to any of the Claims 1 to 4, **characterised in that** said valve seat (27) and said valve member (28) are so configured and designed that in a functional state that is **characterised by** the non-contact of both elements, a communication (55) between said working space (23) and said relief volume (43) is released.

6. Control device (1) for a braking system, in particular a pressure control device for a vehicle braking system, comprising at least one pressure circuit, **characterised in that** in normal operation, said at least one pressure circuit (3, 4) is electro-pneumatically operated and is adapted for being operated additionally also pneumatically for safety in the event of failure of the electronic system,
6.1 comprising a braking-force generator (8) and an actuator element (5, 6; 6.2) coupled to it for predetermining the driver's wish that a braking momentum of a defined level be provided;
6.2 a pressure circuit (3; 3.2) includes a control means (9; 9.2) for its electro-pneumatic control and a pressure-regulating module (10; 10.2) with at least one electro-pneumatically controllable valve means (11);
6.3 said pressure circuit (4) includes a mechanically operable service brake valve means (15) for its pneumatic emergency control, wherein
6.4 said controllable valve means (11) of said pressure circuit (3) and said service brake valve means (15) are constituted by a combined electro-pneumatically and mechanically operable valve means (18) according to any of the Claims 1 to 5.

7. Control device (1; 1.2) according to Claim 6, **characterised by** the following features:
7.1 said pressure-regulating module (10; 10.2) includes two control valves (40.1; 40.2);
7.2 said control valves (40.1; 40.2) are arranged in connecting lines between said working chamber (23) and said control chamber (22), on the one hand, and said control chamber (22) and the environment or a relief volume (43), on the other hand.

8. Control device (1) for a braking system according to Claim (8) according to any of the Claims 6 or 7, **characterised in that** said control device (9), said braking-force generator (8) and said combined electro-pneumatically or mechanically operable valve means (18) are combined so as to constitute a single structural unit.

9. Control device (1) for a braking system according to Claim (8) according to any of the Claims 6 or 7, **characterised in that** said control device (9), said braking-force generator (8) and said combined electro-pneumatically or mechanically operable valve means (18) are disposed in immediate structural vicinity relative to each other.

10. Control device (1) for a braking system according to Claim 8 or 9, **characterised in that** said control means (9), said braking-force generator (8) and said combined electro-pneumatically or mechanically operable valve means (18) constitute an integral component.

11. Control device (1) for a braking system according to any of the Claims 8 to 10, **characterised in that** said control means (9), said braking-force generator (8) and said combined electro-pneumatically or mechanically operable valve means (18) are flange-mounted on each other on their housings.

## Revendications

1. Ensemble soupape à actionnement combiné électropneumatique et mécanique (18) pour systèmes de freinage, comprenant deux circuits de pression - un premier circuit électropneumatique (3) et un deuxième circuit de pression mécano pneumatique (4) ;
1.1 renfermant une chambre de travail (23) disposée dans un carter (19);
1.2 au moins un raccord (24) pour le couplage à une source de milieu comprimé ou un drain de milieu comprimé, ayant un raccord (25) à coupler ladite chambre de travail (23) à au moins un cylindre de frein de service et un raccord menant à un volume de décompression (43);
1.3 un siège de soupape (27) apte à être couplé indirectement à des autres éléments de transfert ou directement à un moyen acteur (6) et élément de soupape (28);
1.4 dans lequel ledit siège de soupape (27) et ledit élément de soupape (28) sont guidés de manière coaxiale l'un relativement à l'autre ou de façon déplaçable l'un relativement à l'autre, pendant qu'ils divisent ladite chambre (20) en une chambre de commande (22) et ladite chambre de travail (23);
1.5 dans lequel ledit élément de soupape (28) est disposé entre ledit raccord (24) pour le couplage à une source de milieu comprimé ou un drain de milieu comprimé et ladite chambre de travail (23), en étant guidé dans ledit carter (19) de façon étanche à la pression;
1.6 en comprenant des arrêts (49, 50) disposés audit siège de soupape (27) et audit élément de soupape (28) afin de limiter la déplaçabilité relative audit carter (19),
**caractérisé en ce**
- **que** ledit élément de soupape (28) est configuré sous forme d'un élément de manchon (33) et
- en ce que ledit élément de soupape (28) comprend un piston double à deux parties de piston guidées dans ledit carter (19) de manière étanche à la pression, ainsi qu'un conduit de communication intégrée et/ou un espace (48) et au moins un manchon (47) guidé à une partie de piston (30) et disposé en position coaxiale relative au dernier pour le dégagement ou la fermeture à volonté de la communication entre ledit raccord (24) menant à ladite source de milieu comprimé ou ledit drain de milieu comprimé et ledit volume de travail (23).

2. Ensemble soupape à actionnement combiné électropneumatique et mécanique (18) selon la revendication 1, **caractérisé en ce que** ledit piston double est configuré en tant qu'une unité structurelle intégrale, dans laquelle un volume (45) est usiné.

3. Ensemble soupape à actionnement combiné électropneumatique et mécanique (18) selon une quelconque des revendications 1 ou 2, **caractérisé en ce que** ledit manchon (47) s'appuie via une unité à ressort (45) opposée à une partie de piston (30).

4. Ensemble soupape à actionnement combiné électropneumatique et mécanique (18) selon une quelconque des revendications 1 à 3, **caractérisé par** les caractéristiques suivantes :
4.1 ladite première partie de piston (30) limite ladite chambre de commande (22) par son côté frontal en face de la paroi intérieure du carter (34) pendant que ladite deuxième partie de piston (29) limite ladite chambre de travail (23);
4.2 ladite deuxième partie de piston (29), dans la zone de son diamètre extérieur, est guidé directement sur la paroi intérieur du carter à l'extérieur (34) et, dans la zone de son diamètre intérieur, via le système de couplage, à ladite première partie de piston (30) dans ledit carter (19) ;
4.3 ledit manchon est guidé sur ladite première partie de piston (30) en une direction le long de l'axe longitudinal carter (19) pour son déplacement relatif au dernier, et, en au moins une position de régime, il porte contre ladite deuxième partie de piston (29) dans la zone du diamètre intérieur du dernier, d'une manière étanche à la pression.

5. Ensemble soupape à actionnement combiné électropneumatique et mécanique (18) selon une quelconque des revendications 1 à 4, **caractérisé en ce que** ledit siège de soupape (27) et ledit élément de soupape (28) sont configurés et conçus d'une telle manière, qu'en état de régime, qui se distingue par la manque de contact des deux éléments, une communication (55) entre ledit volume de travail (23) et ledit volume de décompression (43) soit dégagée.

6. Dispositif de commande (1) pour un système de freinage, en particulier un dispositif de commande de pression pour un système de freinage d'un véhicule, comprenant au moins un circuit de pression, **caractérisé en ce qu'**en régime normal, ledit au moins un circuit de pression (3, 4) est opéré de manière électropneumatique, en étant apte à être également opéré de manière pneumatique afin d'assurer la sûreté au cas de défaillance du système électronique,
6.1 comprenant un générateur d'effort de freinage (8) et un élément de commande (5, 6; 6.2) y couplé à déterminer le requête du routier ou chauffeur qu'un moment de freinage soit disponible à un niveau défini ;
6.2 un circuit de pression (3; 3.2) comprend un moyen de commande (9; 9.2) pour sa commande électropneumatique et un module régulateur de pression (10; 10.2) à au moins un moyen à soupape commandable électropneumatique (11);
6.3 ledit circuit de pression (4) comprend un moyen à soupape de freinage de service à commande mécanique (15) pour sa commande d'urgence pneumatique, dans lequel
6.4 ledit moyen à soupape commandable (11) dudit circuit de pression (3) et ledit moyen à soupape de freinage de (15) sont constitués par un ensemble soupape (18) combiné électropneumatique et mécanique selon une quelconque des revendications 1 to 5.

7. Dispositif de commande (1; 1.2) selon la revendication 6, **caractérisé par** les caractéristiques suivantes :
7.1 ledit module régulateur de pression (10; 10.2) comprend deux vannes pilotes (40.1; 40.2) ;
7.2 lesdites vannes pilotes (40.1; 40.2) sont disposés dans des conduits de communication entre ladite chambre de travail (23) et ladite chambre de commande (22), d'un côté, et ladite chambre de commande (22) et l'environnement ou un volume de décompression (43), d'autre côté.

8. Dispositif de commande (1) pour un système de freinage selon la revendication (8) selon une quelconque des revendications 6 ou 7, **caractérisé en ce que** ledit moyen de commande (9), ledit générateur d'effort de freinage (8) et ledit ensemble soupape combiné à commande électropneumatique ou mécanique (18) sont intégrés de manière à constituer une unité structurelle.

9. Dispositif de commande (1) pour un système de freinage selon la revendication 7, **caractérisé en ce que** ledit moyen de commande (9), ledit générateur d'effort de freinage (8) et ledit ensemble soupape combiné à commande électropneumatique ou mécanique (18) sont disposés à proximité structurelle directe l'un relativement à l'autre.

10. Dispositif de commande (1) pour un système de freinage selon la revendication 8 or 9, **caractérisé en ce que** ledit moyen de commande (9), ledit générateur d'effort de freinage (8) et ledit ensemble soupape combiné à commande électropneumatique ou mécanique (18) constituent un composant intégral.

11. Dispositif de commande (1) pour un système de freinage, selon une quelconque des revendications 8 à 10, **caractérisé en ce** ledit moyen de commande (9), ledit générateur d'effort de freinage (8) et ledit ensemble soupape combiné à commande électropneumatique ou mécanique (18) sont montés par flasque l'un à l'autre à leurs carters.
